# EUROPÄISCHE PATENTSCHRIFT

(11) **EP 2 914 372 B1**
(45) Veröffentlichungstag und Bekanntmachung des Hinweises auf die Patenterteilung: **27.12.2017**
(21) Anmeldenummer: 13783964.3
(22) Anmeldetag: 31.10.2013
(51) Int. Cl.: B01F 5/20, B01F 13/10, B01F 15/02, A21C 1/00, C12C 7/04, C12C 7/06

(54) **VORRICHTUNG UND VERFAHREN ZUR MISCHUNG VON SCHÜTTGUT MIT EINER FLÜSSIGKEIT**
APPARATUS AND METHOD FOR MIXING OF BULK MATERIAL WITH A LIQUID
DISPOSITIF ET PROCÉDÉ DE MÉLANGE DE MARCHANDISE EN VRAC AVEC UN LIQUIDE

(30) Priorität: 02.11.2012 EP 12191025
(43) Veröffentlichungstag der Anmeldung: 09.09.2015
(73) Patentinhaber: Bühler AG, 9240 Uzwil (CH)
(72) Erfinder: LAUERMANN, Heinz, CH-8589 Sitterdorf (CH); HASLER, Madlen, CH-8400 Winterthur (CH); BERNARD, Patrice, CH-3673 Linden (CH); ARNOLD, Fabian, CH-3903 Mund (CH); ALLENSPACH, Marius, CH-8890 Flums (CH); STÖPPLER, Andreas, CH-9043 Trogen (CH); FRANK, Andreas, CH-9000 St. Gallen (CH)
(74) Vertreter: Hepp Wenger Ryffel AG
(86) Internationale Anmeldenummer: PCT/EP2013/072830
(87) Internationale Veröffentlichungsnummer: WO 2014/068067

(56) Entgegenhaltungen:
- EP-A1- 0 385 901
- EP-A1- 1 333 083
- WO-A1-2009/112534
- WO-A2-2004/035278
- CH-A- 1 306
- DE-A1-102005 035 833
- DE-A1-102006 050 783
- DE-C- 602 996
- DE-C- 968 781
- GB-A- 2 059 940
- GB-A- 2 474 769
- SU-A1- 1 161 163
- US-A- 4 323 314

## Beschreibung

Die Erfindung betrifft eine Vorrichtung und ein Verfahren zur kontinuierlichen Benetzung und/oder Mischung von Schüttgut mit einer Flüssigkeit gemäss den Oberbegriffen der unabhängigen Ansprüche. Insbesondere betrifft die vorliegende Erfindung eine Vorrichtung und ein Verfahren zur Herstellung eines Teigprodukts.
Traditionell werden Teigprodukte und auch viele andere Lebensmittel-Mischungen aus einem Schüttgut und einer Flüssigkeit dadurch erhalten, dass das Schüttgut und die Flüssigkeit separat in einen Behälter eingefüllt werden und dann mit Hilfe eines Rührwerks vermischt werden, welches in einem Bodenbereich des Behälters angeordnet sein könnte. Allerdings ist hierfür ein sehr langes Mischen erforderlich, um eine zufriedenstellende Durchmischung der Inhaltsstoffe zu erzielen.
Um eine bessere Durchmischung in kürzerer Zeit zu erreichen, wurde im Stand der Technik bereits vor längerer Zeit vorgeschlagen, das Schüttgut im freien Fall mit der Flüssigkeit zu besprühen. Aus der DE 602 996, die eine Vorrichtung entsprechend dem Oberbegriff des Anspruchs 1 sowie ein Verfahren entsprechend dem Oberbegriff des Anspruchs 13 offenbart, ist beispielweise eine Vorrichtung zum stetigen Mischen pulverförmiger Stoffe mit Flüssigkeiten bekannt, insbesondere von Mehl mit Wasser zur Teigbereitung für Bäckereizwecke. Ein Mischbehälter dieser Vorrichtung ist von einer ringförmigen Wasserleitung umgeben, an der gleichmässig auf den Umfang verteilte Sprühdüsen in gleicher Höhe angeordnet sind, so dass ihre Hauptachsen im Grundriss einen konzentrisch zur Behälterachse liegenden Kreis berühren. Allerdings kann auch mit dieser Vorrichtung keine besonders homogene Mischung der Inhaltsstoffe erreicht werden.
Die US 4,323,314 offenbart eine weitere Vorrichtung und ein Verfahren zur Zufügung von Flüssigkeitskomponenten unter anderem zu Schüttgut. Die Vorrichtung umfasst einen Mischbehälter, in den das Schüttgut mittels einer Fördereinrichtung zugeführt wird. In einem oberen Zuführungsabschnitt für das Schüttgut ist ein sich konisch erweitender Deflektor angeordnet zur Erzeugung eines Hohlzylinderstroms an Schüttgut. In einem Behandlungsbereich sind mehrere Düsen angeordnet zur Benetzung des schlauchförmigen Schüttguts. Die Dicke dieser schlauchförmigen Schicht erlaubt jedoch keine ausreichende Benetzung des Schüttguts durch deren gesamte Dicke hindurch. Folglich kann ebenfalls keine besonders homogene Durchmischung erzielt werden. Dieser Nachteil kann auch nicht durch die in der US 4,323,314 vorgeschlagene zentrale Düse am oberen Ende des Mischbehälters ausgeglichen werden.

Die DE 968 781 offenbart eine Vorrichtung zur Herstellung von Brotteigen. Sie umfasst eine Kammer, in der sich eine gitterförmige Aufladeelektrode für das durchfallende Mehl befindet. Im unteren Teil der Kammer ist ein Düsenkranz mit Düsen für das Einsprühen und Vernebeln von Wasser angeordnet. Das Mehl wird mittels einer Fördereinrichtung, wie beispielsweise eines Schwingaufgebers, durch einen Trichter in die Kammer gefördert. Zur leichten Abbremsung und Zerstreuung des Mehls ist ein Kegel der Elektrode vorgelagert. Beim Durchgang durch die Elektrode wird das Mehl elektrisch aufgeladen. Unterhalb der Elektrode schwebt das Mehl durch die Nebelzone des Wassers, wobei sich die Benetzung vollzieht. Aufgrund der gitterförmigen Elektrode erlaubt diese Vorrichtung jedoch nur einen vergleichsweise geringen Durchsatz an Mehl. Vor allem aber ist diese Vorrichtung aufgrund der Elektrode sowohl in der Herstellung als auch im Betrieb äusserst aufwändig.

Des Weiteren ist aus der DE 102 19 683 C1 unter anderem eine Vorrichtung zur Teigbereitung mit einer Mischkammer und einem Schneckenförderer zum Transportieren von Zutaten für ein Lebensmittel in die Mischkammer bekannt. In der Mischkammer liegen die Zutaten auf der Unterseite der Mischkammer auf und werden dort mittels einer Düseneinheit mit einer Flüssigkeit unter Hochdruck beaufschlagt, wobei die Flüssigkeit auf eine Gehäuseinnenwand der Mischkammer gerichtet wird, so dass eine Vermischung der Zutaten in eine teigartige Konsistenz erfolgt.

Dieser vorbekannte Stand der Technik weist den Nachteil auf, dass Teig nach der Teigbereitung an der Vorrichtung anhaftend verbleiben kann. Durch die Ausgestaltung der Vorrichtung und das Verbleiben von Teigresten nach der Teigbereitung ist eine zumindest teilweise Demontage der Vorrichtung für die Reinigung notwendig, was aufwendig ist und substantielle Betriebskosten verursacht.

Es ist daher eine Aufgabe der vorliegenden Erfindung, die Nachteile des Bekannten zu vermeiden, insbesondere also eine Vorrichtung und ein Verfahren bereitzustellen, mit denen eine zuverlässige kontinuierliche Benetzung und/oder Mischung von Schüttgut mit einer Flüssigkeit durchführbar ist und ein Reinigen der Vorrichtung im Wesentlichen ohne Demontage der Vorrichtung erfolgen kann. Insbesondere soll eine möglichst homogene Mischung erreicht werden. Weiterhin insbesondere soll eine Vorrichtung bereitgestellt werden, die eine ortsgebunden Reinigung im Wesentlichen ohne Demontage, ein so genanntes "Cleaning In Place" (CIP), ermöglicht. Eine weitere Aufgabe der vorliegenden Erfindung ist insbesondere die Bereitstellung einer Distributionseinrichtung für ein Teigprodukt, die eine Reinigung im Wesentlichen ohne Demontage der Distributionseinrichtung ermöglicht.

Diese Aufgaben werden durch eine Vorrichtung sowie ein Verfahren gemäss den unabhängigen Ansprüchen gelöst.

Die erfindungsgemässe Vorrichtung ist geeignet zur kontinuierlichen Benetzung und/oder Mischung von Schüttgut mit einer Flüssigkeit zur Herstellung einer Lebensmittel-Mischung wie etwa eines Teigprodukts. Mit anderen Worten ist die Vorrichtung geeignet zur Benetzung und/oder Mischung von Schüttgut mit einer Flüssigkeit im kontinuierlichen Betrieb unter fortwährender Materialzufuhr und Materialabfuhr.

Unter einer Lebensmittel-Mischung wird hier und im Folgenden eine Mischung verstanden, die als Lebensmittel geeignet ist. Als Lebensmittel werden dabei Stoffe oder Erzeugnisse angesehen, die dazu bestimmt sind oder von denen nach vernünftigem Ermessen erwartet werden kann, dass sie in verarbeitetem, teilweise verarbeitetem oder unverarbeitetem Zustand von Menschen aufgenommen werden. Als Schüttgut wird insbesondere Mehl verwendet und als Flüssigkeit insbesondere Wasser. Alternativ kann, beispielsweise in der Brauerei, als Schüttgut auch ein stärkehaltiger Brauereirohstoff eingesetzt werden. Dieser stärkehaltige Brauereirohstoff kann Malz, Stärke, Reis (insbesondere in Form von Bruchreis und/oder Reismehl und/oder Reisflocken), Schrot (insbesondere Gerstenschrot), Mais (insbesondere Maisgrits und/oder Maismehl) oder beliebige Kombinationen davon enthalten oder daraus bestehen. Bei diesen Verwendungen in der Brauerei wird die Mischung als Maische bezeichnet, die im Sinne der vorliegenden Erfindung ebenfalls als Lebensmittel-Mischung angesehen wird.

Die Vorrichtung umfasst eine Schüttgutzufuhreinrichtung zur Zufuhr des Schüttguts in einen Behandlungsbereich und eine Flüssigkeitszufuhreinrichtung zum direkten Beaufschlagen des Schüttguts mit der Flüssigkeit in dem Behandlungsbereich. Das Schüttgut ist in den Behandlungsbereich mittels der Schüttgutzufuhreinrichtung als Vorhang zuführbar, wobei der Vorhang mittels der Flüssigkeitszufuhreinrichtung vollständig zumindest auf der Aussenfläche des Vorhangs mit Flüssigkeit beaufschlagbar ist. Mit anderen Worten ist zumindest eine umhüllende Fläche des Vorhangs im Behandlungsbereich mit Flüssigkeit beaufschlagbar.

Dies weist den Vorteil auf, dass eine bessere Benetzung und/oder Mischung des Schüttguts mit der Flüssigkeit unter anderem bei gegenüber dem Stand der Technik niedrigeren Drücken der Flüssigkeit erfolgen kann, wodurch die Vorrichtung im Betrieb weniger Ablagerungen aufweist. Aufgrund der geringeren Ablagerung lässt sich die Vorrichtung daher vorteilhaft einfacher reinigen.

Insbesondere kann ein Teigprodukt ein Sauerteig oder ein Brotteig sein, der geeignet ist zur Herstellung von Backwaren; beispielsweise kann als Teigprodukt ein Roggensauerteig oder auch ein Weizenvorteig hergestellt werden.

Unter einem "direktem Beaufschlagen" des Schüttguts mit der Flüssigkeit wird im Sinne der vorliegenden Anmeldung verstanden, dass die Flüssigkeit unmittelbar von der Flüssigkeitszufuhreinrichtung zum Schüttgut gefördert wird, beispielsweise durch Aufsprühen auf das Schüttgut, wie etwa mit mindestens einer Düse.

Unter einem "Behandlungsbereich" wird im Sinne der vorliegenden Anmeldung der Bereich der Vorrichtung verstanden, in dem das Schüttgut bei bestimmungsgemässem Gebrauch mit der Flüssigkeit beaufschlagt wird.

Unter einer Zuführung des Schüttguts als "Vorhang" in den Behandlungsbereich wird im Sinne der vorliegenden Anmeldung eine Schicht des Schüttguts verstanden, deren Dicke im Behandlungsbereich im Bereich von 1 mm bis 25 mm und bevorzugt von 2 mm bis 17 mm liegt. Dicken in diesem Bereich sorgen für einen Kompromiss zwischen einem hinreichendem Durchsatz an Schüttgut und einer ausreichenden Benetzung des Schüttguts durch die gesamte Dicke des Vorhangs hindurch. Demgegenüber bewirkt beispielsweise die Elektrode der oben bereits erwähnten DE 968 781 eher eine Zerstäubung des Mehls, so dass überhaupt kein Vorhang im Sinne der vorliegenden Erfindung entsteht. Insbesondere ist die Dicke der Schicht des Schüttguts im Behandlungsbereich um zumindest einen Faktor 20, bevorzugt zumindest einen Faktor 50 und besonders bevorzugt zumindest einen Faktor 150 kleiner ist als eine Breite der Schicht im Behandlungsbereich; die Breite der Schicht im Behandlungsbereich wird im Wesentlichen senkrecht zur Schüttgutförderrichtung und senkrecht zur Dicke bestimmt; die Länge des Vorhangs im Behandlungsbereich wird im Wesentlichen parallel zur Schüttgutförderrichtung bestimmt.

Unter dem Begriff "Schüttgut" wird im Sinne der vorliegenden Anmeldung ein körniges, mehliges oder auch stückiges Gut verstanden, das in einer schüttfähigen Form vorliegt und insbesondere fliessfähig oder rieselfähig ist. Insbesondere werden als Schüttgut Reismehl, Mehl, Schrot, Bäckereimischungen, Korn, fliessfähige, pulvrige Substanzen und beliebige Kombinationen daraus verstanden.

Erfindungsgemäss ist die Schüttgutzufuhreinrichtung als Einrichtung zur gleichmässigen Zufuhr des Schüttguts in den Behandlungsbereich ausgebildet. Eine solche gleichmässige Zufuhr des Schüttguts erlaubt eine homogene Durchmischung des Schüttguts mit der Flüssigkeit, insbesondere zu homogenen Teigprodukten.

Erfindungsgemäss umfasst die Schüttgutzufuhreinrichtung zu diesem Zwecke einen Schneckenförderer zur Förderung des Schüttguts in den Behandlungsbereich oder ein Rohr mit einem darin angeordneten Propeller, wobei der Schneckenförderer bzw. das Rohr unter einem Winkel zu einer Vertikalen angeordnet ist, der höchstens 10°, bevorzugt höchstens 2°, besonders bevorzugt höchstens 0° ist.

Mit Hilfe eines derart angeordneten Schneckenförderers lässt sich das Schüttgut besonders gleichmässig und kontinuierlich in den Behandlungsbereich fördern, so dass insbesondere besonders homogene Teigprodukte erhalten werden können. Im Gegensatz dazu wird mit einem horizontal angeordneten Schneckenförderer, so wie er beispielsweise in der DE 602 996 dargestellt ist, das Schüttgut in einzelnen Portionen stossweise mit der Umdrehungsfrequenz der Schnecke in den Behandlungsbereich gefördert.

Besonders bevorzugt ist ein Durchmesser einer Schnecke des Schneckenförderers auf der dem Behandlungsbereich zugewandten Seite geringer als ein Durchmesser auf der dem Behandlungsbereich abgewandten Seite. Insbesondere erstreckt sich der sich im Durchmesser verringernde Bereich über zumindest zwei Schneckengänge. Bevorzugt ist der sich im Durchmesser verringernde Bereich auf der dem Behandlungsbereich zugewandten Seite der Schnecke angeordnet. In einem weiteren Bereich, insbesondere auf der dem Behandlungsbereich abgewandten Seite der Schnecke, kann der Durchmesser der Schnecke konstant sein. In dem sich im Durchmesser verringernde Bereich kann die Schnecke insbesondere konisch ausgebildet sein. Ein Innendurchmesser eines Gehäuses des Schneckenförderers, in dem die Schnecke aufgenommen ist, verringert sich im sich im Durchmesser verringernden Bereich der Schnecke weniger als der Durchmesser der Schnecke und bleibt vorzugsweise konstant.

Dies hat den Vorteil, dass im zulaufenden Bereich das Schüttgut aus der Schnecke zu rieseln beginnt, da diese im Wesentlichen vertikal, d.h. im Wesentlichen parallel zur Wirkung der Schwerkraft, angeordnet ist, wodurch das Schüttgut vorhangartig in die Behandlungskammer gefördert wird.

Bevorzugt ist zwischen der Schüttgutzufuhreinrichtung, insbesondere der Schnecke des Schneckenförderers, und dem Behandlungsbereich eine sich in Richtung des Behandlungsbereichs insbesondere konisch erweiternde Verteileinrichtung angeordnet. Insbesondere ist die sich erweiternde Verteileinrichtung an der Schnecke des Schneckenförderers stromabwärts der Schneckengänge angeordnet und rotiert mit der Schnecke mit. Alternativ ist auch eine separate Anordnung der sich erweiternden Verteileinrichtung, welche nicht mit der Schnecke mitrotiert, einsetzbar.

Dies hat den Vorteil, dass die vorhangartige Ausbildung des Schüttguts in dem Behandlungsbereich bezüglich der Dicke des Vorhangs noch besser einstellbar ist.

Beim Betrieb der Vorrichtung kann die Schnecke des Schneckenförderers mit einer Rotationsgeschwindigkeit im Bereich von 500 U/min bis 1500 U/min rotieren. Derartige Rotationsgeschwindigkeiten erlauben eine besonders gleichmässige Zufuhr des Schüttguts in den Behandlungsbereich.

Bevorzugt umfasst die Flüssigkeitszufuhreinrichtung zumindest zwei Düsen zum direkten Beaufschlagen des Schüttguts mit der Flüssigkeit in dem Behandlungsbereich. Bevorzugt umfasst die Flüssigkeitszufuhreinrichtung zumindest sechs Düsen, weiter bevorzugt mindestens sechzehn Düsen und ganz besonders bevorzugt genau sechzehn Düsen. Insbesondere sind die zumindest zwei Düsen und bevorzugt sechs Düsen als Düsen gleichen Typs ausgebildet, die bevorzugt auf einem Ring angeordnet sind und in Umfangsrichtung des Rings im Wesentlichen einen gleichen Abstand zueinander aufweisen. Alternativ ist auch die Verwendung unterschiedlicher Düsen denkbar.

Dies hat den Vorteil, dass die Benetzung des Vorhangs zuverlässiger erfolgen kann, beispielsweise durch Auswahl unterschiedlicher Düsen und/oder der Anordnung der Düsen in der Vorrichtung.

Bevorzugt sind die Schüttgutzufuhreinrichtung und die Flüssigkeitszufuhreinrichtung derart zueinander angeordnet, dass das Schüttgut mit der Flüssigkeit in dem Behandlungsbereich im Wesentlichen ohne Kontakt mit einer Innenwand der Vorrichtung beaufschlagbar ist. Mit anderen Worten weist das Schüttgut im Behandlungsbereich einen Abstand von der Innenwand insbesondere einer Behandlungskammer auf.

Dies hat den Vorteil, dass unerwünschte Ablagerungen in der Vorrichtung im Betrieb weiter verringert werden, wodurch die Reinigung noch weiter erleichtert wird. Insbesondere kann auf aufwändige Abstreifer wie in der DE 602 996 verzichtet werden.

Bevorzugt ist die Flüssigkeit mittels der Flüssigkeitszufuhreinrichtung mit einem Druck im Bereich von 2 bar bis 28 bar, bevorzugt von 12 bar bis 23 bar und besonders bevorzugt von 15 bar bis 20 bar auf das Schüttgut aufsprühbar.

Dies hat den Vorteil, dass bei den gegenüber dem Stand der Technik reduzierten Drücken die Benetzung und/oder Mischung besser kontrolliert abläuft, wodurch unerwünschte Ablagerungen in der Behandlungskammer weiter verringert werden.

Bevorzugt sind die zumindest zwei Düsen derart angeordnet, dass die Flüssigkeit in Richtung der Schüttgutförderrichtung gefördert und auf den Vorhang gerichtet wird. Besonders bevorzugt wird die Flüssigkeit in einer Richtung gefördert und auf den Vorhang gerichtet, die unter einem Winkel im Bereich von 30° bis 70° und weiter bevorzugt im Bereich von 30° bis 50° zur Schüttgutförderrichtung verläuft.

Dies hat den Vorteil, dass die Flüssigkeit von dem Bereich stromaufwärts des Behandlungsbereich weggerichtet ist, so dass unter anderem die Wahrscheinlichkeit für ein Spritzen der Flüssigkeit in den Bereich stromaufwärts des Behandlungsbereich verringert wird, was die Reinigung der Vorrichtung weiter erleichtert. Es wird somit weitestgehend verhindert, dass bei der Verwendung von Mehl, welches üblicherweise trocken zugeführt wird, eine Teigablagerung oder auch eine Verklebung stromaufwärts auftreten kann nach der Beaufschlagung mit der Flüssigkeit. Dies könnte die Vorrichtung blockieren oder auch Teig in Bereichen ablagern, die gegebenenfalls schwierig zu reinigen sind, wobei hierfür möglicherweise die Vorrichtung zumindest teilweise demontiert werden müsste.

Bevorzugt sind in der Behandlungskammer die zumindest zwei Düsen in Umfangsrichtung voneinander beabstandet angeordnet. Insbesondere sind die Düsen ringförmig angeordnet; mit anderen Worten sind die Düsen insbesondere auf einem Ring angeordnet und in Umfangsrichtung voneinander beabstandet. Bevorzugt sind zwei der zumindest zwei Düsen in Umfangsrichtung einander gegenüberliegend angeordnet.

Dies hat den Vorteil einer guten Benetzung und/oder Mischung des Schüttguts mit der Flüssigkeit. Insbesondere bei Anordnung von zwei Düsen in Umfangsrichtung einander gegenüberliegend, wobei die Düsen im Wesentlichen auf den gleichen Bereich der Behandlungskammer ausgerichtet sind, durch den das Schüttgut gefördert wird, kann eine noch weiter verbesserte Benetzung und/oder Mischung des Schüttguts mittels der Flüssigkeit erfolgen. Somit ist eine gute Mischung bei gleichzeitiger Verringerung unerwünschter Ablagerungen in der Vorrichtung erzielbar.

Insbesondere können die zumindest zwei Düsen auf einem mit der Vorrichtung lösbar verbundenen Düsenring angeordnet sein. Dies hat den Vorteil, dass entsprechend dem zu behandelnden Schüttgut ein Düsenring mit darauf angeordneten geeigneten Düsen wählbar und austauschbar ist.

Bevorzugt ist die Vorrichtung zumindest im Behandlungsbereich im Wesentlichen rohrförmig mit im Wesentlichen konstantem Durchmesser ausgebildet, wobei eine Längsachse des rohrförmigen Bereichs im Wesentlichen parallel zur Schüttgutförderrichtung liegt.

Dies hat den Vorteil, dass die Lebensmittel-Mischung aus Schüttgut und Flüssigkeit effizient aus der Behandlungskammer förderbar ist, ohne stromaufwärts des Behandlungsbereichs unerwünschte Ablagerungen in der Behandlungskammer zu erhalten. Zudem sind die Behandlungskammer und die stromabwärts der Behandlungskammer angeordneten Komponenten der Vorrichtung mittels der Düsen einfach reinigbar, ohne die Vorrichtung zu demontieren. Insbesondere wird somit ein Cleaning In Place (CIP) ermöglicht. Dies kann beispielsweise durch Zuführung einer Reinigungsflüssigkeit mittels der Düsen und insbesondere des Düsenrings in den Behandlungsbereich erfolgen. Alternativ dazu könnten eine oder mehrere zusätzliche (nicht in den Zeichnungen dargestellte) CIP-Düsen vorhanden oder einbringbar sein.

Bevorzugt ist eine Luftabfuhreinrichtung stromabwärts der Flüssigkeitszufuhreinrichtung angeordnet. Insbesondere ist die Luftabfuhreinrichtung zwischen den zumindest zwei Düsen und einer stromabwärts angeordneten Fördereinrichtung und/oder Aufnahmeeinrichtung für die Lebensmittel-Mischung, insbesondere das Teigprodukt, angeordnet.

Die Luftabfuhreinrichtung kann als zumindest eine Öffnung zur Umgebung der Vorrichtung, wie beispielsweise zumindest ein Loch oder Schlitz, ausgebildet sein. Alternativ oder zusätzlich kann die Luftabfuhreinrichtung als zumindest ein Ventil, wie beispielsweise ein Entlüftungsventil, ausgebildet sein.

Dies hat den Vorteil, dass mittels der Luftabfuhreinrichtung Luft, welche durch die zugeführte Flüssigkeit bei dem entsprechenden Druck mitgefördert wird, zuverlässig abführbar ist. Ohne die Luftabfuhreinrichtung kann gegebenenfalls die Luft nicht zuverlässig aus der Behandlungskammer gefördert werden, wodurch unter Umständen die Lebensmittel-Mischung aus Schüttgut und Flüssigkeit stromaufwärts des Behandlungsbereichs gefördert wird, was zu entsprechenden unerwünschten Ablagerungen in der Vorrichtung führen kann.

Bevorzugt ist eine Luftzufuhreinrichtung stromaufwärts der Flüssigkeitszufuhreinrichtung angeordnet. Dies hat den Vorteil, dass ein Auftreten eines Unterdrucks stromaufwärts der Flüssigkeitszufuhreinrichtung im Wesentlichen vermeidbar ist; das Auftreten eines Unterdrucks kann den Nachteil haben, dass die Förderung des Schüttguts in die Behandlungskammer verringert oder die Bildung des Vorhangs negativ beeinflusst wird, was durch die Anordnung der Luftzufuhreinrichtung im Wesentlichen vermeidbar ist.

Die Luftzufuhreinrichtung kann als zumindest eine Öffnung zur Umgebung der Vorrichtung, wie beispielsweise zumindest ein Loch oder Schlitz, ausgebildet sein. Alternativ oder zusätzlich kann die Luftzufuhreinrichtung als zumindest Ventil, wie beispielsweise ein Belüftungsventil, ausgebildet sein.

Bevorzugt weist die Behandlungskammer einen Einlass für das Schüttgut und einen Auslass für die Lebensmittel-Mischung, insbesondere das Teigprodukt, auf. Die zumindest zwei Düsen sind in einem dem Einlass zugewandten Bereich der Behandlungskammer angeordnet, insbesondere im oberen Drittel und bevorzugt im oberen Viertel bezogen auf die Länge der Behandlungskammer im Wesentlichen parallel zur Schüttgutförderrichtung.

Dies hat den Vorteil, dass durch die Anordnung der zumindest zwei Düsen in einem dem Einlass zugewandten Bereich eine grössere Neigung der Flüssigkeit in Richtung der Schüttgutförderrichtung gewählt werden kann als bei Anordnung in einem dem Auslass zugewandten Bereich, wodurch die Wahrscheinlichkeit des Auftretens unerwünschter Ablagerungen in der Vorrichtung weiter verringert wird. Zudem ist damit bei entsprechender Ausrichtung der zumindest zwei Düsen eine gute Reinigung der Innenwand möglich.

Bevorzugt sind die zumindest zwei Düsen im Wesentlichen in Richtung der im Wesentlichen parallel zur Schüttgutförderrichtung angeordneten Behandlungsbereichsachse hin ausgerichtet.

Dies hat den Vorteil, dass die Benetzung und/oder Mischung des Schüttguts mittels der Flüssigkeit mit möglichst grossem Abstand zur Innenwand der Behandlungskammer durchführbar ist, was das Auftreten unerwünschter Ablagerungen weiter verringert.

Bevorzugt umfasst die Flüssigkeitszufuhreinrichtung eine Konditioniereinrichtung zur Temperierung der Flüssigkeit und/oder zur Dosierung zumindest eines Zusatzstoffes in die Flüssigkeit. Mit Hilfe der Konditioniereinrichtung ist die Flüssigkeit auf eine Temperatur temperierbar, die der Fachmann je nach der gewünschten Anwendung einstellen kann. Im Falle von Teigprodukten ist die Flüssigkeit bevorzugt auf eine Temperatur von kleiner 30 °C, bevorzugt von kleiner 29 °C, durch die Konditioniereinrichtung temperierbar. Bei einer Verwendung in der Brauerei, die weiter unten noch detaillierter beschrieben wird, sind hingegen Temperaturen im Bereich von 30 °C bis 70 °C bevorzugt.

Dies hat den Vorteil, dass die Flüssigkeit entsprechend dem herzustellenden Produkt konditionierbar ist, um eine möglichst optimale Produktqualität zu erreichen.

Bevorzugt weist die Vorrichtung stromabwärts eine Fördereinrichtung, insbesondere eine Förderdüse, zur Förderung einer Zusatzflüssigkeit, insbesondere Hefe, auf und/oder in die Mischung, insbesondere das Teigprodukt. Dies hat den Vorteil, dass optimale Bedingungen für die Förderung der Zusatzflüssigkeit auf und/oder in die Mischung wählbar sind.

Bevorzugt ist das Schüttgut mittels der Schüttgutzufuhreinrichtung als ringsegmentförmiger oder ringförmiger Vorhang in den Behandlungsbereich zuführbar. Bevorzugt ist der Vorhang als Schlauch zuführbar. Als Ringsegment wird vorliegend ein Winkelabschnitt eines Ringes in Umfangsrichtung angesehen.

Dies hat den Vorteil, dass der Durchsatz an Schüttgut durch die Behandlungskammer erhöht wird bei insbesondere weiterhin guter Benetzbarkeit und/oder Mischbarkeit durch eine gegebenenfalls ringförmige Anordnung der Düsen.

Bei ringsegmentförmiger oder ringförmiger Zuführung des Schüttguts als Vorhang wird die Umfangslänge entlang des Ringsegments oder des Rings als Breite des Vorhangs angesehen.

Ein weiterer Aspekt der vorliegenden Erfindung betrifft ein Verfahren zur kontinuierlichen Benetzung und/oder Mischung von Schüttgut mit einer Flüssigkeit in einer Vorrichtung. Insbesondere wird eine Vorrichtung wie vorstehend erläutert verwendet. Die Vorrichtung umfasst einen Behandlungsbereich, eine Schüttgutzufuhreinrichtung zur Zuführung von Schüttgut in den Behandlungsbereich und eine Flüssigkeitszufuhreinrichtung zum direkten Beaufschlagen des Schüttguts mit der Flüssigkeit in dem Behandlungsbereich. Das Verfahren umfasst die Schritte des Zuführens des Schüttguts in den Behandlungsbereich als Vorhang und des anschliessenden Beaufschlagens des Vorhangs vollständig zumindest auf der Aussenfläche mit der Flüssigkeit zur Herstellung einer Lebensmittel-Mischung wie etwa eines Teigprodukts. Dabei wird das Schüttgut mittels eines Schneckenförderers oder eines Rohres mit einem darin angeordneten Propeller gleichmässig in den Behandlungsbereich zugeführt, wobei der Schneckenförderer bzw. das Rohr unter einem Winkel zu einer Vertikalen angeordnet ist, der höchstens 10° ist.

Vorteilhafterweise wird das Schüttgut mit der Flüssigkeit in dem Behandlungsbereich im Wesentlichen ohne Kontakt mit einer Innenwand der Vorrichtung beaufschlagt. Auf diese Weise kann auf aufwändige Abstreifer wie in der DE 602 996 verzichtet werden, wie oben bereits erläutert wurde.

Die Vorrichtung kann weiterhin eine Distributionseinrichtung zur Verteilung der Lebensmittel-Mischung, wie etwa eines Teigprodukts für Bäckereizwecke, enthalten. Die Lebensmittel-Mischung, insbesondere das Teigprodukt, ist insbesondere hergestellt mit einem wie oben beschriebenen Verfahren. Die Distributionseinrichtung umfasst zumindest einen und insbesondere zumindest zwei Reifebehälter, wobei in dem zumindest einen Reifebehälter eine Umwälzeinrichtung angeordnet ist zum Umwälzen des Teigprodukts, insbesondere zum Umwälzen des Teigprodukts innerhalb des Reifebehälters. Bei der Umwälzeinrichtung kann es sich beispielsweise um ein Rührwerk handeln.

Die Distributionseinrichtung kann ferner eine Pumpeinrichtung und ein Leitungssystem zur Verteilung der Lebensmittel-Mischung, insbesondere des Teigprodukts, in den zumindest einen Reifebehälter umfassen. Das Leitungssystem kann in Strömungsverbindung mit einem Boden des zumindest einen Reifebehälters zur Förderung der Lebensmittel-Mischung, insbesondere des Teigprodukts, in den Reifebehälter stehen.

Die Förderung der Lebensmittel-Mischung, insbesondere des Teigprodukts, durch einen Boden des Reifebehälters in den Reifebehälter hat den Vorteil, dass ein Auftreten unerwünschter Ablagerungen im Reifebehälter minimiert wird. Insbesondere werden Ablagerungen auf und/oder in der Umwälzeinrichtung minimiert, die die Lebensmittel-Mischung, insbesondere das Teigprodukt, vorteilhaft bereits während deren Förderung in den Reifebehälter umwälzt, was bei einer Förderung durch eine Oberseite des Reifebehälters zu starken Ablagerungen auf und/oder in der Umwälzeinrichtung führen würde.

Die Pumpeinrichtung ist insbesondere derartig ausgebildet, dass diese im Wesentlichen ohne Demontage reinigbar ist. Derartige Pumpen sind dem Fachmann bekannt.

Teigprodukte, insbesondere Sauerteige, haben häufig vergleichsweise hohe Viskositäten. Falls die Vorrichtung für die Herstellung von Teigprodukten verwendet werden soll, sollten die Umwälzeinrichtung, die Pumpeinrichtung und das Leitungssystem entsprechend hierfür ausgelegt sein. Insbesondere sollten sie übliche Hygienestandards erfüllen, die für die Herstellung von Teigprodukten gelten.

Bevorzugt umfasst die Distributionseinrichtung zumindest zwei Reifebehälter und zumindest eine Armatur, mittels deren steuerbar und/oder regelbar ist, in welchen der Reifebehälter die Lebensmittel-Mischung, insbesondere das Teigprodukt, gefördert werden kann. Insbesondere umfasst die Distributionseinrichtung zumindest einen Schieber oder zumindest ein Ventil oder beliebige Kombinationen daraus, mittels deren steuerbar und/oder regelbar ist, in welchen der Reifebehälter die Lebensmittel-Mischung, insbesondere das Teigprodukt, gefördert wird.

Dies hat den Vorteil, dass entsprechend den Anforderungen oder auch dem Füllgrad eines Reifebehälters die Armatur steuerbar und/oder regelbar ist zum entsprechenden Befüllen der Reifebehälter.

Im Sinn der Anmeldung ist eine Armatur ein in einer Leitung angeordnetes Bauelement zum Steuern und/oder Regeln von Stoffströmen in der Leitung.

Der Reifebehälter kann mindestens eine Öffnung aufweisen, durch welche die Lebensmittel-Mischung, insbesondere das Teigprodukt, in den Reifbehälter hineinströmen und/oder aus dieser hinausströmen kann, wobei der Reifebehälter ferner mindestens ein Ventil enthalten kann, mittels dessen das Hineinströmen und/oder Hinausströmen steuerbar ist. Bei geschlossenem Ventil kann dann allein mit Hilfe einer Umwälzeinrichtung eine Umwälzung der Lebensmittel-Mischung, insbesondere des Teigprodukts, innerhalb des Reifebehälters erfolgen.

Beim Betrieb der Vorrichtung kann die Lebensmittel-Mischung, insbesondere ein Teigprodukt wie etwa ein Sauerteig, fermentiert werden, insbesondere während einer Fermentierungszeit im Bereich von 3 h bis 24 h. Die Fermentierung wird bevorzugt in einem wie oben beschriebenen Reifebehälter durchgeführt. Zumindest während eines Grossteils der Fermentierungszeit, insbesondere während der gesamten Fermentierungszeit, kann dafür gesorgt werden, dass keine Lebensmittel-Mischung in den Reifebehälter hineinströmt oder aus diesem hinausströmt, beispielsweise mit Hilfe eines wie oben beschriebenen Ventils.

Noch ein weiterer hier offenbarter, aber nicht unabhängig beanspruchter Aspekt ist die Verwendung einer wie oben beschriebenen Vorrichtung in der Brauerei, insbesondere zur kontinuierlichen Benetzung und/oder Mischung eines stärkehaltigen Brauereirohstoffs (insbesondere eines oder mehrerer wie oben beschriebenen Brauereirohstoffe) mit Wasser. Bei diesen Verwendungen wird die Mischung als Maische bezeichnet. Diese Maische kann gemaischt werden, beispielsweise während einer Maischezeit im Bereich von bis zu 4 h. Die Maischung wird bevorzugt in einem wie oben beschriebenen Reifebehälter ('Maischegefäss') durchgeführt. Zumindest während eines Grossteils der Maischungszeit, insbesondere während der gesamten Maischungszeit, kann dafür gesorgt werden, dass keine Maische in den Reifebehälter hineinströmt oder aus diesem hinausströmt, beispielsweise mit Hilfe eines wie oben beschriebenen Ventils.

In den Verwendungen in der Brauerei muss in einigen Fällen die Schüttgutzufuhreinrichtung nicht zwingend als Einrichtung zur gleichmässigen Zufuhr des Schüttguts in den Behandlungsbereich ausgebildet sein, insbesondere nicht als im Wesentlichen vertikal angeordneter Schneckenförderer. Insbesondere kann auf eine solche Ausbildung verzichtet werden, wenn der stärkehaltige Brauereirohstoff vergleichsweise grobkörnig ist, so wie es etwa für Schrot, Bruchreis, Reisflocken und Maisgrits der Fall ist.

Weitere Merkmale und Vorteile der Erfindung werden nachfolgend anhand von Ausführungsbeispielen zum besseren Verständnis näher erläutert, ohne dass die Erfindung auf die Ausführungsbeispiele zu beschränken ist. Es zeigen:
- Figur 1:: schematische Darstellung einer erfindungsgemässen Vorrichtung zur kontinuierlichen Mischung von Mehl mit vertikal angeordnetem Schneckenförderer;
- Figur 2:: schematische Darstellung einer alternativen erfindungsgemässen Vorrichtung zur kontinuierlichen Mischung von Mehl mit einem Propeller;
- Figur 3:: schematische Darstellung einer Distributionseinrichtung zur Verteilung eines Teigprodukts mit einem Reifebehälter;
- Figur 4:: schematische Darstellung einer alternativen Distributionseinrichtung zur Verteilung eines Teigprodukts mit zwei Reifebehältern;
- Figur 5:: schematische Darstellung einer Draufsicht auf eine erfindungsgemässe Vorrichtung mit einem geraden Vorhang;
- Figur 6:: schematische Darstellung einer Draufsicht auf eine alternative erfindungsgemässe Vorrichtung mit einem ringförmigen Vorhang;
- Figur 7:: eine weitere erfindungsgemässe Vorrichtung, welche insbesondere zur Verwendung in der Brauerei geeignet ist;
- Figur 8:: eine weitere erfindungsgemässe Vorrichtung, welche insbesondere zur Verwendung in der Brauerei geeignet ist;
- Figur 9:: eine weitere erfindungsgemässe Vorrichtung, welche insbesondere zur Verwendung in der Brauerei geeignet ist.

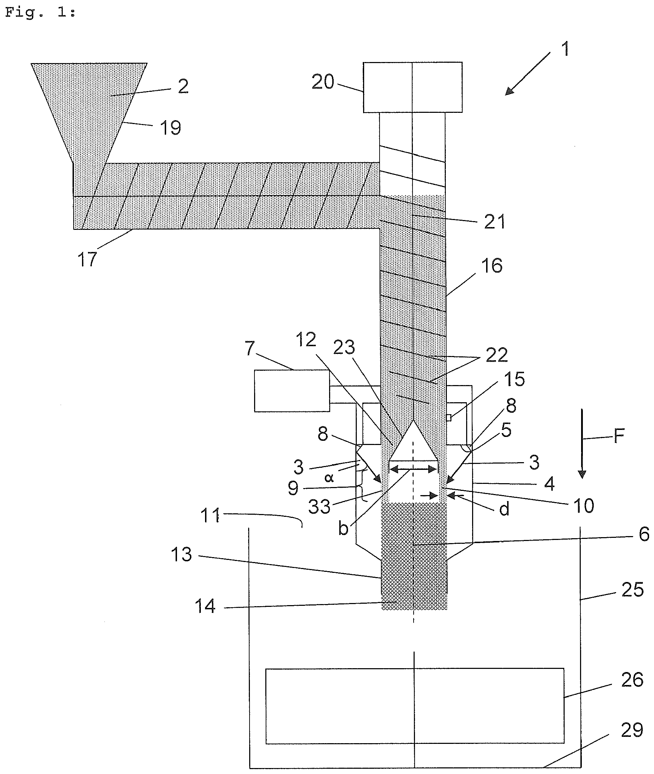

In Figur 1 ist in schematischer Darstellung eine erfindungsgemässe Vorrichtung 1 zur kontinuierlichen Benetzung und/oder Mischung von Mehl 2 mittels Wasser 3 in einer Seitenansicht dargestellt, wobei die Vorrichtung einen vertikal angeordneten Schneckenförderer 16 umfasst, der eine Einrichtung zur gleichmässigen Zufuhr des Mehls 2 darstellt.

Die erfindungsgemässe Vorrichtung 1 umfasst einen Zufuhrtrichter 19 zur Zufuhr von Mehl 2 in einen horizontal angeordneten Schneckenförderer 17.

Mittels des horizontalen Schneckenförderers 17 wird das Mehl 2 in den vertikal angeordneten Schneckenförderer 16 gefördert. Der vertikale Schneckenförderer 16 weist einen Antrieb 20 auf, um eine Schnecke 21 des vertikalen Schneckenförderers 16 in Rotation zu versetzen, und zwar bevorzugt mit Rotationsgeschwindkeiten im Bereich von 500 U/min bis 1500 U/min. An der Schnecke 21 sind Schneckengänge 22 angeordnet zum Fördern des Mehls 2 zu einem Einlass-12 einer rohrförmigen Behandlungskammer 4. In der Behandlungskammer 4 ist ein weiter unten noch detaillierter beschriebener Behandlungsbereich 9 angeordnet. An dem dem Behandlungsbereich 9 zugewandten Ende des vertikalen Schneckenförderers 16 sind die beiden untersten Schneckengänge 22 verkürzt ausgebildet, so dass ein Durchmesser der Schnecke 21 zum Behandlungsbereich 9 hin geringer wird. Hierdurch erfolgt ein Rieseln des Mehls 2 aus der Schnecke 21 im konisch zulaufenden Bereich, wodurch ein Vorhang 10 im Behandlungsbereich 9 gebildet wird. Zudem ist an dem dem Behandlungsbereich 9 zugewandten Ende der Schnecke 21 eine sich konisch erweiternde Verteileinrichtung 23 angeordnet zur Ausbildung des Vorhanges 10 im Behandlungsbereich 9. Hierdurch erhält der Vorhang 10 im Behandlungsbereich 9 eine Dicke d von etwa 8-10 mm. Die Verteileinrichtung 23 weist auf der dem Behandlungsbereich 9 zugewandten Seite eine Breite b von 50 mm auf.

Stromaufwärts einer Flüssigkeitszufuhreinrichtung 7 weist die Vorrichtung 1 eine Luftzufuhröffnung 15 als Luftzufuhreinrichtung auf.

Der Vorhang 10 weist im Behandlungsbereich 9 parallel zu einer Behandlungsbereichsachse 6 eine Länge auf, die etwa um einen Faktor 50 grösser als die Dicke d ist. Der Vorhang 10 ist schlauchförmig ausgebildet.

In der Behandlungskammer 4 mit der Innenwand 5 ist ein Düsenring angeordnet, von dem zwei Düsen 8 dargestellt sind. Die zwei Düsen 8 sind zur parallel zur Schüttgutförderrichtung F angeordneten Behandlungsbereichsachse 6 hin ausgerichtet. Dabei wird das Wasser 3 unter einem Winkel α im Bereich von 30° bis 70° zur Schüttgutförderrichtung F auf den Vorhang 10 gerichtet. Die zwei Düsen 8 sind in Umfangsrichtung einander gegenüberliegend angeordnet; weitere Düsen sind hier zur besseren Übersichtlichkeit nicht dargestellt.

Mittels der Düsen 8 ist Wasser 3 auf das vorhangartig zugeführte Mehl 2 aufsprühbar in dem Behandlungsbereich 9 in der Behandlungskammer 4 zur vollständigen Benetzung des Vorhangs 10 zumindest auf der Aussenfläche 33. Das Wasser 3 wird mittels der Flüssigkeitszufuhreinrichtung 7 umfassend eine Pumpe mit einem Druck von 15 bar zu den Düsen 8 gefördert und auf das Mehl 2 gesprüht. Mittels einer in der Flüssigkeitszufuhreinrichtung 7 angeordneten Konditioniereinrichtung wird das Wasser 3 temperiert auf eine Temperatur von etwa 28 °C.

Durch das Aufsprühen des konditionierten Wassers 3 im Behandlungsbereich 9 auf das vorhangartig angeordnete Mehl 2 in der Behandlungskammer 4 erfolgt eine Benetzung des Mehls 2 durch das konditionierte Wasser 3, so dass ein Teigprodukt 14 hergestellt wird. Das Teigprodukt 14 kann beispielsweise ein Sauerteig sein.

Das Teigprodukt 14 wird stromabwärts der Behandlungskammer 4 durch einen Auslass 13 der Behandlungskammer 4 in einen Reifebehälter 25 gefördert, in dem das Teigprodukt 14 gelagert wird, bis dieses die gewünschten Backeigenschaften aufweist. Für die Lagerung weist der Reifebehälter 25 einen Boden 29 auf, auf dem ein Teil des Teigprodukts 14 während der Lagerung aufliegt. Mittels einer im Reifebehälter 25 angeordneten Umwälzeinrichtung 26 in Form eines Rührwerks wird das Teigprodukt 14 während der Lagerung und auch bereits beim Fördern in den Reifebehälter 25 umgewälzt. Zwischen dem Reifebehälter 25 und der Behandlungskammer 4 ist eine Luftabfuhröffnung 11 als Luftabfuhreinrichtung angeordnet, so dass die durch das Wasser 3 geförderte Luft zuverlässig aus der Vorrichtung 1 gefördert wird und im Wesentlichen kein Teigprodukt 14 stromaufwärts des Behandlungsbereichs 9 gefördert wird.

Nach Abschluss der Herstellung des Teigprodukts 14 kann ohne die Präsenz des Mehls 2 mittels der Düsen 8 Wasser 3 in die Behandlungskammer 4 eingesprüht werden zur Reinigung der Behandlungskammer 4 sowie der stromabwärts angeordneten Komponenten der Vorrichtung 1. Hierdurch kann eine Reinigung ohne Demontage von Komponenten der Vorrichtung 1 erreicht werden, das heisst ein Cleaning In Place (CIP). Alternativ dazu könnten eine oder mehrere zusätzliche (nicht in den Zeichnungen dargestellte) CIP-Düsen vorhanden oder einbringbar sein.

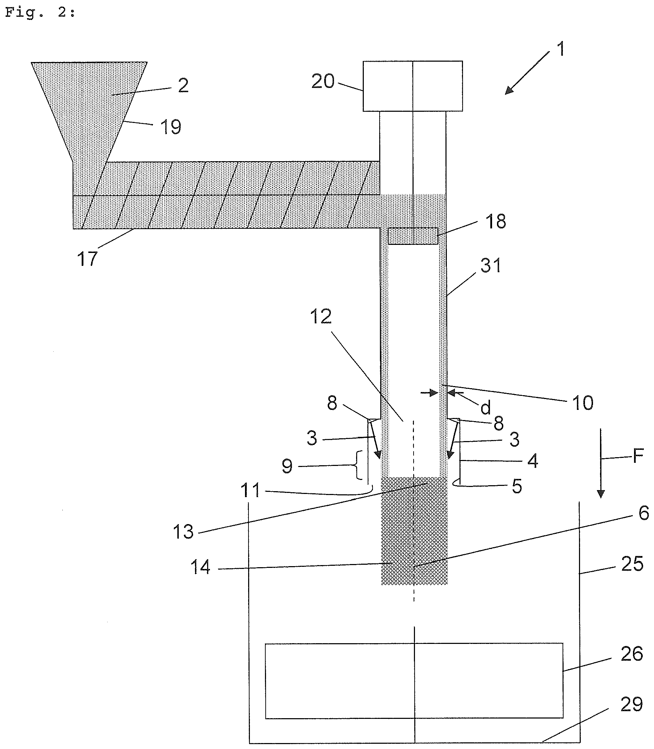

In Figur 2 ist in schematischer Darstellung eine alternative erfindungsgemässe Vorrichtung zur Herstellung eines Teigprodukts 14 mit einem Propeller 18 zur Erzeugung des Vorhangs 10 dargestellt.

Gleiche Referenzzeichen bezeichnen gleiche Merkmale in allen Figuren und werden deshalb nur bei Bedarf erneut erläutert.

Wie bereits zu Figur 1 ausgeführt, wird das Mehl 2 mittels des horizontalen Schneckenförderers 17 gefördert. Anstelle eines vertikal angeordneten Schneckenförderers als Einrichtung zur gleichmässigen Zufuhr des Schüttguts umfasst die Vorrichtung 1 gemäss Figur 2 ein Rohr 31 zum Fördern des Mehls 2 von einem Auslass des horizontal angeordneten Schneckenförderers 17 zu einem Einlass 12 der Behandlungskammer 4.

Mittels des im Rohr 31 angeordneten Propellers 18, der durch den Antrieb 20 in Rotation versetzbar ist, wird der Vorhang 10 mit der Dicke d gebildet und mittels der Wirkung der Schwerkraft zur Behandlungskammer 4 entlang des Rohres 31 gefördert. Dadurch wird eine gleichmässige Zufuhr des Schüttguts erreicht.

In der Behandlungskammer 4 sind die Düsen 8 in Umfangsrichtung von einander beabstandet und einander gegenüberliegend angeordnet. Die zwei Düsen 8 sind zur parallel zur Schüttgutförderrichtung F angeordneten Behandlungsbereichsachse 6 hin ausgerichtet.

Nach der Benetzung des Mehls 2 in dem Behandlungsbereich 9 wird das Teigprodukt 14 durch einen Auslass 13 der Behandlungskammer 4 in den Reifebehälter 25 gefördert.

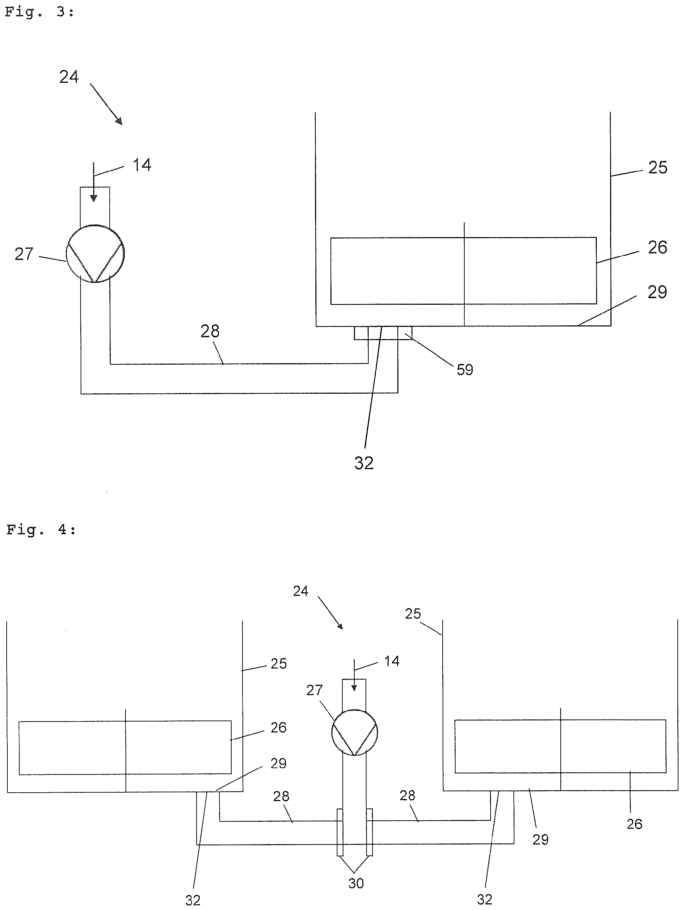

In Figur 3 ist in schematischer Darstellung eine Distributionseinrichtung 24 einer erfindungsgemässen Vorrichtung dargestellt.

Das Teigprodukt 14 wird beispielsweise aus einer Vorrichtung wie in Figur 1 dargestellt von dem Auslass der Behandlungskammer 4 gemäss Figur 1 in die Distributionseinrichtung 24 gefördert zur Pumpeinrichtung 27. Bei der Pumpeinrichtung 27 handelt es sich um eine Pumpe, die ohne Demontage reinigbar ist. Derartige Pumpeinrichtungen 27, mit denen auch viskose Teigprodukte förderbar sind, sind dem Fachmann bekannt.

Mittels der Pumpeinrichtung 27 wird das Teigprodukt 14 durch das Leitungssystem 28 zu dem Reifebehälter 25 gefördert. Der Reifebehälter 25 weist einen Boden 29 mit einer Bodenöffnung 32 auf, durch die das Teigprodukt 14 in den Reifebehälter 25 förderbar ist. Die Bodenöffnung 32 ist mit einem Ventil 59 verschliessbar, mittels dessen das Hineinströmen in den Reifebehälter 25 und/oder das Hinausströmen aus dem Reifebehälter steuerbar ist. In Figur 3 ist das Ventil 59 in einer Schliessposition dargestellt. In dieser Schliessposition ist das sich im Reifebehälter 25 befindende Teigprodukt 14 mittels der Umwälzeinrichtung 26 umwälzbar. Es kann dabei eine Fermentierung stattfinden, die für Sauerteig beispielsweise im Bereich von 3 h bis 24 h liegen kann.

Durch die Förderung des Teigprodukts 14 in den Reifebehälter 25 durch die Bodenöffnung 32 kann eine Ablagerung von Teigresten auf Antriebsteilen der Umwälzeinrichtung 26 weitgehend vermieden werden.

In Figur 4 ist in schematischer Darstellung eine alternative Distributionseinrichtung 24 einer erfindungsgemässen Vorrichtung dargestellt. Im Unterschied zur Distributionseinrichtung gemäss Figur 3 weist die Distributionseinrichtung 24 gemäss Figur 4 zwei Reifebehälter 25 auf, in die das Teigprodukt 14 mittels der Pumpeinrichtung 27 förderbar ist.

In dem Leitungssystem 28 sind zwei Schieber 30 angeordnet, mittels deren wählbar ist, in welchen der Reifebehälter 25 das Teigprodukt 14 durch die Bodenöffnungen 32 gefördert wird.

Bei den Beispielen gemäss den Figuren 3 und 4 kann die Lebensmittel-Mischung die Reifebehälter 25 durch die gleichen Bodenöffnungen 32 wieder verlassen. Alternativ dazu ist es auch möglich, dass die Reifebehälter 25 separate Öffnungen, insbesondere separate Bodenöffnungen, aufweisen, durch die Lebensmittel-Mischung die Reifebehälter 25 wieder verlassen kann.

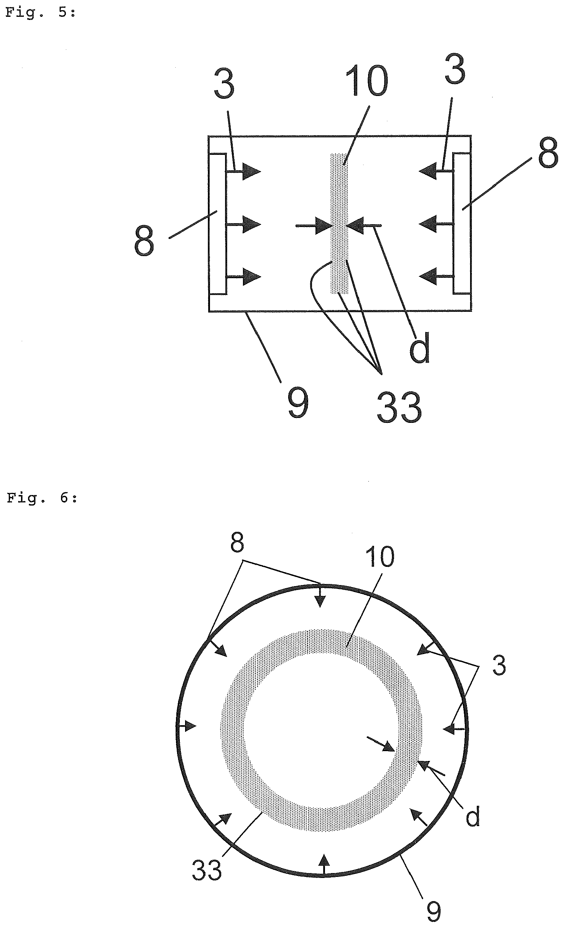

In Figur 5 ist in schematischer Darstellung eine Draufsicht in Förderrichtung des Schüttguts auf eine erfindungsgemässe Vorrichtung mit einem im Schnitt rechteckigen Behandlungsbereich 9 mit einem ebenen Vorhang 10 dargestellt. Ein derartiger ebener Vorhang 10 kann mit einer Vibrorinne als Schüttgutzufuhreinrichtung in den Behandlungsbereich 9 zugeführt werden. In dem Behandlungsbereich 9 sind einander gegenüberliegende Flachdüsen 8 angeordnet zur vollständigen Benetzung des Vorhangs 10 zumindest auf der Aussenfläche 33 des Vorhangs 10 mit Wasser 3.

In Figur 6 ist in schematischer Darstellung eine Draufsicht in Förderrichtung des Schüttguts auf eine alternative erfindungsgemässe Vorrichtung mit einem rohrförmigen Behandlungsbereich 9 mit einem ringförmigen Vorhang 10 dargestellt. In dem Behandlungsbereich 9 ist ein Düsenring mit zehn Düsen 8 angeordnet zur vollständigen Benetzung des Vorhangs 10 zumindest auf der Aussenfläche 33 des Vorhangs 10 mit Wasser 3.

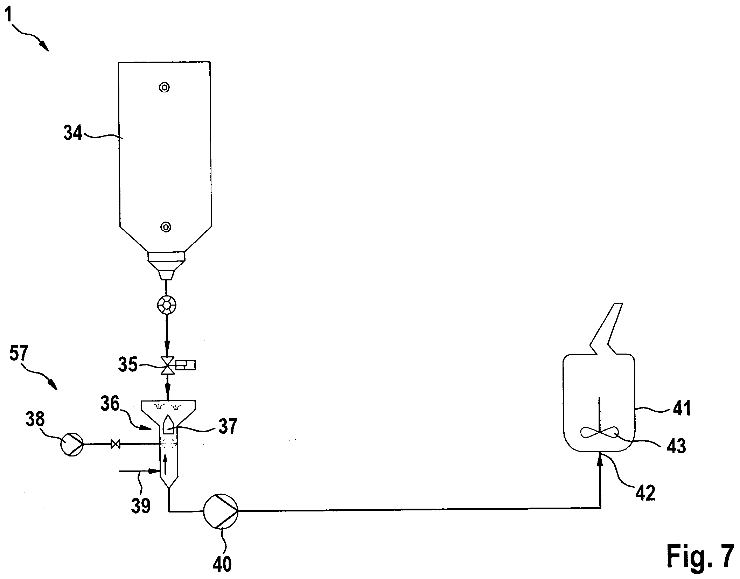

Die Figur 7 zeigt eine weitere erfindungsgemässe Vorrichtung 1, welche sich insbesondere zur Verwendung in der Brauerei eignet. Aus einem Behälter 34 wird geschrotetes Gerstenmalz durch ein dampfdichtes und säurebeständiges Ventil 35 in eine Behandlungskammer 36 zugeführt. Dort ist eine sich konisch erweiternde Verteileinrichtung 37 angeordnet, die einen hier nicht dargestellten Vorhang aus dem Gerstenmalz bildet. Mit Hilfe einer Pumpe 38 einer Flüssigkeitszufuhreinrichtung 57 wird Wasser unter einem Druck von beispielsweise 10 bar in radialer Richtung auf den Vorhang aufgesprüht, was zu einer kontinuierlichen Benetzung des Gerstenmalzes führt. Mittels einer optionalen weiteren Pumpe 39 kann weiteres Wasser auf den Vorhang gerichtet werden. Eine Pumpeinrichtung 40 leitet die hierdurch entstehende Lebensmittel-Mischung durch eine Bodenöffnung 42 in einen Maischbottich 41 ein, in dem eine Umwälzeinrichtung 43 in Form eines an sich bekannten Rührwerks angeordnet ist.

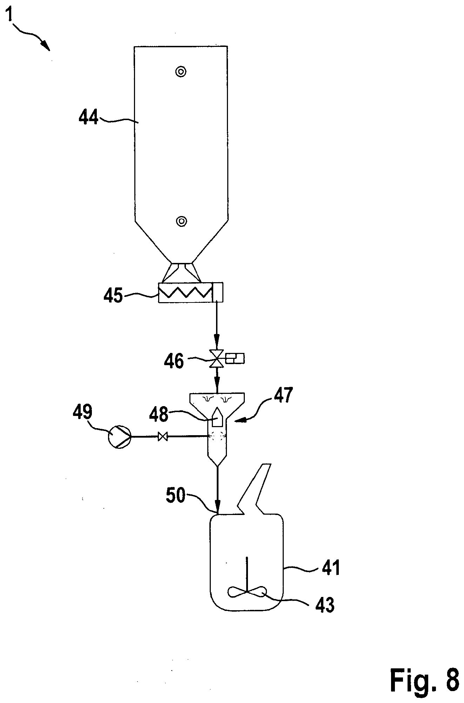

Eine alternative Ausführungsform ist in Figur 8 dargestellt. Hier wird geschrotetes Gerstenmalz in einem Behälter 44 bereitgestellt, von dem aus es durch z. B. einen horizontal angeordneten Schneckenförderer 45 und ein dampfdichtes und säurebeständiges Ventil 46 in eine Behandlungskammer 47 zugeführt wird. Auf einen vertikal angeordneten Schneckenförderer kann in diesem Beispiel angesichts des vergleichsweise grobkörnigen Brauereirohstoffs verzichtet werden. Stattdessen enthält die Behandlungskammer 47 in diesem Beispiel nur eine konusförmige Verteileinrichtung 48, die der Erzeugung eines Vorhangs aus dem Gerstenmalz dient. Eine Pumpe 49 einer Flüssigkeitszufuhreinrichtung 58 sorgt für das Aufsprühen von Wasser auf diesen Vorhang, wobei ein Druck von beispielsweise 10 bar aufgebracht wird. Das derart benetzte Malz wird dann durch eine obere Öffnung 50 in den Maischbottich 41 eingeleitet.

Natürlich ist es auch möglich, dass die beiden Ausführungsformen gemäss den Figuren 7 und 8 miteinander kombiniert werden - dass also sowohl gemäss Figur 7 Maische durch eine Bodenöffnung 42 als auch gemäss Figur 8 Maische durch eine obere Öffnung 50 in ein und denselben Maischbottich 41 eingeleitet werden.

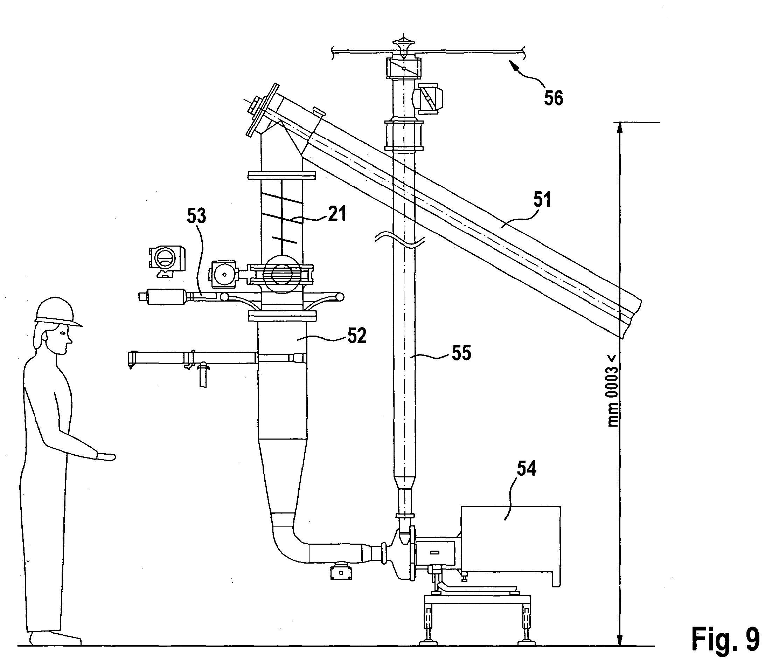

Bei der in Figur 9 dargestellten Ausführungsform wird geschrotetes Gerstenmalz durch ein Transportsystem 51, z.B. eine Förderschnecke, in eine Behandlungskammer 52 zugeführt. In der Behandlungskammer 52 wird ein Vorhang aus Gerstenmalz erzeugt. Dies kann beispielsweise mit Hilfe einer in Figur 9 gezeigten Schnecke 21 erfolgen, die im unteren Bereich konisch ausgebildet ist. Alternativ oder zusätzlich kann ein Vorhang mit einer wie oben beschriebenen, in Figur 9 aber nicht dargestellten Verteileinrichtung erzeugt werden. Durch eine weitere Leitung 53 wird warmes Wasser in die Behandlungskammer 52 eingeleitet (bevorzugt mit einer Temperatur im Bereich von 30 °C bis 90 °C), wo dieses versprüht und auf den Vorhang gerichtet wird, um diesen zu benetzen. Mittels einer Pumpeinrichtung 54 wird die somit entstandene Lebensmittel-Mischung durch eine Steigleitung 55 in einen Maischbottich 56 eingeleitet, der hier nur teilweise dargestellt ist.

## Patentansprüche

1. Vorrichtung (1) zur kontinuierlichen Benetzung und/oder Mischung von Schüttgut, insbesondere Mehl (2), mit einer Flüssigkeit, insbesondere Wasser (3), zur Herstellung einer Lebensmittel-Mischung wie etwa eines Teigprodukts (14), wobei die Vorrichtung (1) eine Schüttgutzufuhreinrichtung zur Zufuhr des Schüttguts in einen Behandlungsbereich (9) und eine Flüssigkeitszufuhreinrichtung (7; 57; 58) zum direkten Beaufschlagen des Schüttguts mit der Flüssigkeit in dem Behandlungsbereich (9) umfasst, wobei das Schüttgut in den Behandlungsbereich (9) mittels der Schüttgutzufuhreinrichtung als Vorhang (10) zuführbar ist und dass der Vorhang (10) mittels der Flüssigkeitszufuhreinrichtung (7; 57; 58) vollständig zumindest auf der Aussenfläche (33) des Vorhangs (10) mit Flüssigkeit beaufschlagbar ist, wobei die Schüttgutzufuhreinrichtung als Einrichtung zur gleichmässigen Zufuhr des Schüttguts in den Behandlungsbereich (9) ausgebildet ist, **dadurch gekennzeichnet, dass** die Schüttgutzufuhreinrichtung einen Schneckenförderer (16) zur Förderung des Schüttguts in den Behandlungsbereich (9) oder ein Rohr (31) mit einem darin angeordneten Propeller (18) umfasst, wobei der Schneckenförderer (16) bzw. das Rohr (31) unter einem Winkel zu einer Vertikalen angeordnet ist, der höchstens 10° ist.

2. Vorrichtung (1) nach Anspruch 1, **dadurch gekennzeichnet, dass** die Schüttgutzufuhreinrichtung und die Flüssigkeitszufuhreinrichtung (7; 57; 58) derart zueinander angeordnet sind, dass das Schüttgut mit der Flüssigkeit in dem Behandlungsbereich (9) im Wesentlichen ohne Kontakt mit einer Innenwand (5) der Vorrichtung (1) beaufschlagbar ist.

3. Vorrichtung (1) nach einem der Ansprüche 1 und 2, **dadurch gekennzeichnet, dass** die Flüssigkeit mittels der Flüssigkeitszufuhreinrichtung (7; 57; 58) mit einem Druck im Bereich von 2 bar bis 28 bar, bevorzugt von 12 bar bis 23 bar und besonders bevorzugt von 15 bar bis 20 bar auf das Schüttgut aufsprühbar ist.

4. Vorrichtung (1) nach einem der Ansprüche 1 bis 3, **dadurch gekennzeichnet, dass** die Flüssigkeitszufuhreinrichtung (7; 57; 58) zumindest zwei Düsen (8) zum direkten Beaufschlagen des Schüttguts mit der Flüssigkeit in dem Behandlungsbereich (9) umfasst, wobei die zumindest zwei Düsen (8) derart angeordnet sind, dass die Flüssigkeit in Richtung der Schüttgutförderrichtung (F) gefördert und auf den Vorhang gerichtet wird.

5. Vorrichtung (1) nach einem der Ansprüche 1 bis 4, **dadurch gekennzeichnet, dass** eine Luftabfuhreinrichtung stromabwärts der Flüssigkeitszufuhreinrichtung (7; 57; 58) angeordnet ist, insbesondere zwischen zumindest zwei Düsen (8) der Flüssigkeitszufuhreinrichtung (7; 57; 58) und einer stromabwärts angeordneten Fördereinrichtung und/oder Aufnahmeeinrichtung für die Lebensmittel-Mischung, insbesondere das Teigprodukt (14).

6. Vorrichtung (1) nach einem der Ansprüche 2 bis 5, **dadurch gekennzeichnet, dass** die Flüssigkeitszufuhreinrichtung (7; 57; 58) zumindest zwei Düsen (8) zum direkten Beaufschlagen des Schüttguts mit der Flüssigkeit in dem Behandlungsbereich (9) umfasst, wobei die zumindest zwei Düsen (8) zur im Wesentlichen parallel zur Schüttgutförderrichtung (F) angeordneten Behandlungsbereichsachse (6) hin ausgerichtet sind.

7. Vorrichtung (1) nach einem der Ansprüche 1 bis 6, **dadurch gekennzeichnet, dass** die Flüssigkeitszufuhreinrichtung (7; 57; 58) eine Konditioniereinrichtung zur Temperierung der Flüssigkeit und/oder zur Dosierung zumindest eines Zusatzstoffes in die Flüssigkeit umfasst.

8. Vorrichtung (1) nach einem der Ansprüche 1 bis 7, **dadurch gekennzeichnet, dass** ein Durchmesser einer Schnecke (21) des Schneckenförderers (16) auf der dem Behandlungsbereich (9) zugewandten Seite geringer ist als ein Durchmesser auf der dem Behandlungsbereich (9) abgewandten Seite, wobei sich der im Durchmesser verringernde Bereich insbesondere über zumindest zwei Schneckengänge erstreckt.

9. Vorrichtung (1) nach einem der Ansprüche 1 bis 8, **dadurch gekennzeichnet, dass** zwischen der Schüttgutzufuhreinrichtung, insbesondere der Schnecke (21) des Schneckenförderers (16), und dem Behandlungsbereich (9) eine sich in Richtung des Behandlungsbereichs (9) insbesondere konisch erweiternde Verteileinrichtung (23; 37; 48) angeordnet ist.

10. Vorrichtung (1) nach einem der Ansprüche 1 bis 9, weiterhin enthaltend eine Distributionseinrichtung (24) zur Verteilung der Lebensmittel-Mischung wie etwa eines Teigprodukts (14) für Bäckereizwecke, insbesondere hergestellt mit einem Verfahren gemäss Anspruch 13, wobei die Distributionseinrichtung (24) zumindest einen und insbesondere zumindest zwei Reifebehälter (25; 41; 56) umfasst und in dem zumindest einen Reifebehälter (25; 41; 56) eine Umwälzeinrichtung (26; 43) angeordnet ist zum Umwälzen der Lebensmittel-Mischung, insbesondere des Teigprodukts (14), wobei die Distributionseinrichtung (24) eine Pumpeinrichtung (27; 40; 54) und ein Leitungssystem (28; 55) umfasst zur Verteilung der Lebensmittel-Mischung, insbesondere des Teigprodukts (14), in den zumindest einen Reifebehälter (25; 41; 56), wobei das Leitungssystem (28; 55) mit einem Boden (29) des zumindest einen Reifebehälters (25; 41; 56) in Strömungsverbindung steht zur Förderung der Lebensmittel-Mischung, insbesondere des Teigprodukts (14), in den zumindest einen Reifebehälter (25; 41; 56).

11. Vorrichtung (1) nach Anspruch 10, **dadurch gekennzeichnet, dass** die Distributionseinrichtung (24) zumindest zwei Reifebehälter (25; 41; 56) umfasst, wobei die Distributionseinrichtung (24) zumindest eine Armatur, insbesondere zumindest einen Schieber (30) oder zumindest ein Ventil oder beliebige Kombinationen daraus, umfasst, mittels deren steuerbar und/oder regelbar ist, in welchen der Reifebehälter (25; 41; 56) die Lebensmittel-Mischung, insbesondere das Teigprodukt (14), gefördert wird.

12. Vorrichtung (1) nach einem der Ansprüche 10 und 11, **dadurch gekennzeichnet, dass** der Reifebehälter (25; 41; 56) mindestens eine Öffnung (32; 42; 50) aufweist, durch welche die Lebensmittel-Mischung in den Reifbehälter (25; 41; 56) hineinströmen und/oder aus dieser hinausströmen kann, und dass der Reifebehälter (25; 41; 56) ferner mindestens ein Ventil (59) enthält, mittels dessen das Hineinströmen und/oder Hinausströmen steuerbar ist.

13. Verfahren zur kontinuierlichen Benetzung und/oder Mischung von Schüttgut mit einer Flüssigkeit in einer Vorrichtung (1), insbesondere gemäss einem der Ansprüche 1 bis 12, wobei die Vorrichtung (1) einen Behandlungsbereich (9), eine Schüttgutzufuhreinrichtung zur Zuführung von Schüttgut in den Behandlungsbereich (9) und eine Flüssigkeitszufuhreinrichtung (7; 57; 58) zum direkten Beaufschlagen des Schüttguts mit der Flüssigkeit in dem Behandlungsbereich (9) umfasst, mit den Schritten des Zuführens des Schüttguts in den Behandlungsbereich (9) als Vorhang (10) und des anschliessenden Beaufschlagens des Vorhangs (10) vollständig zumindest auf der Aussenfläche (33) mit der Flüssigkeit zur Herstellung einer Lebensmittel-Mischung wie etwa eines Teigprodukts (14), **dadurch gekennzeichnet, dass** das Schüttgut mittels eines Schneckenförderers (16) oder eines Rohres (31) mit einem darin angeordneten Propeller (18) gleichmässig in den Behandlungsbereich (9) zugeführt wird, wobei der Schneckenförderer (16) bzw. das Rohr (31) unter einem Winkel zu einer Vertikalen angeordnet ist, der höchstens 10° ist.

14. Verfahren gemäss Anspruch 13, **dadurch gekennzeichnet, dass** das Schüttgut mittels eines Schneckenförderers (16) gleichmässig in den Behandlungsbereich (9) zugeführt wird und eine Schnecke (21) des Schneckenförderers (16) mit einer Rotationsgeschwindigkeit im Bereich von 500 U/min bis 1500 U/min rotiert.

## Claims

1. An apparatus (1) for continuously wetting and/or mixing bulk material, in particular flour (2), with a liquid, in particular water (3), in order to produce a food mixture such as a dough product (14), wherein the apparatus (1) comprises a bulk material feeding device for feeding the bulk material into a treatment zone (9) and a liquid feeding device (7; 57; 58) for directly applying the liquid to the bulk material in the treatment zone (9), wherein the bulk material can be fed into the treatment zone (9) as a curtain (10) by means of the bulk material feeding device, and wherein the liquid can be applied to the curtain (10) completely, at least on the outer surface (33) of the curtain (10), by means of the liquid feeding device (7; 57; 58), **characterized in that** the bulk material feeding device is designed as a device for uniformly feeding the bulk material into the treatment zone (9) and comprises a screw conveyor (16) for conveying the bulk material into the treatment zone (9) or a tube (31) with a propeller (18) arranged therein, wherein the screw conveyor (16) or the tube (31), respectively, is arranged at an angle of at most 10° with respect to a vertical.

2. The apparatus (1) as claimed in claim 1, **characterized in that** the bulk material feeding device and the liquid feeding device (7; 57; 58) are arranged in relation to each other in such a way that the liquid can be applied to the bulk material in the treatment zone (9) substantially without contact with an inner wall (5) of the apparatus (1).

3. The apparatus (1) as claimed in either of claims 1 and 2, **characterized in that**, by means of the liquid feeding device (7; 57; 58), the liquid can be sprayed onto the bulk material with a pressure in the range of 2 bar to 28 bar, preferably of 12 bar to 23 bar, and particularly preferably of 15 bar to 20 bar.

4. The apparatus (1) as claimed in one of claims 1 through 3, **characterized in that** the liquid feeding device (7; 57; 58) comprises at least two nozzles (8) for directly applying the liquid to the bulk material in the treatment zone (9), wherein the at least two nozzles (8) are arranged in such a way that the liquid is conveyed and directed to the curtain in the direction of the bulk material conveying direction (F).

5. The apparatus (1) as claimed in one of claims 1 through 4, **characterized in that** an air discharge device is arranged downstream of the liquid feeding device (7; 57; 58), in particular between at least two nozzles (8) of the liquid feeding device (7; 57; 58) and a downstream conveying device and/or receiving device for the food mixture, in particular the dough product (14).

6. The apparatus (1) as claimed in one of claims 2 through 5, **characterized in that** the liquid feeding device (7; 57; 58) comprises at least two nozzles (8) for directly applying the liquid to the bulk material in the treatment zone (9), wherein the at least two nozzles (8) are oriented toward the treatment zone axis (6) arranged substantially parallel to the bulk material conveying direction (F).

7. The apparatus (1) as claimed in one of claims 1 through 6, **characterized in that** the liquid feeding device (7; 57; 58) comprises a conditioning device for adjusting the temperature of the liquid and/or for metering at least one additional substance into the liquid.

8. The apparatus (1) as claimed in one of claims 1 through 7, **characterized in that** a diameter of a screw (21) of the screw conveyor (16) on the side facing toward the treatment zone (9) is smaller than a diameter on the side facing away from the treatment zone (9), wherein the area of decreasing diameter extends in particular over at least two screw flights.

9. The apparatus (1) as claimed in one of claims 1 through 8, **characterized in that** a distributor (23; 37; 48), which in particular widens conically in the direction of the treatment zone (9), is arranged between the bulk material feeding device, in particular the screw (21) of the screw conveyor (16), and the treatment zone (9).

10. The apparatus (1) as claimed in one of claims 1 through 9, further containing a distribution device (24) for distributing the food mixture, for example a dough product (14) for bakery purposes, in particular produced by a method as claimed in claim 13, wherein the distribution device (24) comprises at least one and in particular at least two maturing containers (25; 41; 56), and a circulating device (26; 43) is arranged in the at least one maturing container (25; 41; 56) for the purpose of circulating the food mixture, in particular the dough product (14), wherein the distribution device (24) comprises a pump device (27; 40; 54) and a pipe system (28; 55) for distributing the food mixture, in particular the dough product (14), into the at least one maturing container (25; 41; 56), wherein the pipe system (28; 55) is in fluidic communication with a bottom (29) of the at least one maturing container (25; 41; 56) for conveying the food mixture, in particular the dough product (14), into the at least one maturing container (25; 41; 56).

11. The apparatus (1) as claimed in claim 10, **characterized in that** the distribution device (24) comprises at least two maturing containers (25; 41; 56), wherein the distribution device (24) comprises at least one fixture, in particular at least one slide (30) or at least one valve or any combinations thereof, by means of which it is possible to control and/or regulate into which of the maturing containers (25; 41; 56) the food mixture, in particular the dough product (14), is conveyed.

12. The apparatus (1) as claimed in either of claims 10 and 11, **characterized in that** the maturing container (25; 41; 56) has at least one opening (32; 42; 50) through which the food mixture can flow into and/or out of the maturing container (25; 41; 56), and **in that** the maturing container (25; 41; 56) moreover contains at least one valve (59) by means of which it is possible to control the inward and/or outward flow.

13. A method for continuously wetting and/or mixing bulk material with a liquid in an apparatus (1), in particular as claimed in one of claims 1 through 12, wherein the apparatus (1) comprises a treatment zone (9), a bulk material feeding device for feeding bulk material into the treatment zone (9), and a liquid feeding device (7; 57; 58) for directly applying the liquid to the bulk material in the treatment zone (9), **characterized by** the steps of feeding the bulk material into the treatment zone (9) as a curtain (10) and then applying the liquid to the curtain (10) completely at least on the outer surface (33) in order to produce a food mixture such as a dough product (14), wherein the bulk material is fed uniformly into the treatment zone (9) by means of a screw conveyor (16) or a substantially vertically arranged tube (31) with a propeller (18) arranged therein, wherein the screw conveyor (16) or the tube (31), respectively, is arranged at an angle of at most 10° with respect to a vertical.

14. The method as claimed in claim 13, **characterized in that** the bulk material is fed uniformly into the treatment zone (9) by a screw conveyor (16) and a screw (21) of the screw conveyor (16) rotates at a rotational speed in the range from 500 rpm to 1500 rpm.

## Revendications

1. Dispositif (1) pour mouiller en continu et/ou mélanger en continu un produit en vrac, en particulier de la farine (2), comprenant un liquide, en particulier de l'eau (3), pour produire un mélange d'aliments tel que par exemple un produit pâteux (14), le dispositif (1) comprenant un système d'alimentation de produit en vrac pour l'alimentation du produit en vrac dans une région de traitement (9) et un système d'alimentation de liquide (7 ; 57 ; 58) pour solliciter directement le produit en vrac avec le liquide dans la région de traitement (9), le produit en vrac pouvant être acheminé sous forme de rideau (10) dans la région de traitement (9) au moyen du système d'alimentation de produit en vrac et que le rideau (10) peut être sollicité complètement avec du liquide au moyen du système d'alimentation de liquide (7 ; 57 ; 58) au moins sur la surface extérieure (33) du rideau (10), le système d'alimentation de produit en vrac étant réalisé sous forme de système pour l'alimentation uniforme du produit en vrac dans la région de traitement (9), **caractérisé en ce que** le système d'alimentation de produit en vrac comprend un transporteur à vis sans fin (16) pour transporter le produit en vrac dans la région de traitement (9) ou un tuyau (31) avec une hélice (18) disposée dans celui-ci, le transporteur à vis sans fin (16) ou le tuyau (31) étant disposé suivant un angle de 10° maximum par rapport à une verticale.

2. Dispositif (1) selon la revendication 1, **caractérisé en ce que** le système d'alimentation de produit en vrac et le système d'alimentation de liquide (7 ; 57 ; 58) sont disposés l'un à côté de l'autre de telle sorte que le produit en vrac puisse être sollicité avec le liquide dans la région de traitement (9) essentiellement sans contact avec une paroi interne (5) du dispositif (1).

3. Dispositif (1) selon l'une quelconque des revendications 1 et 2, **caractérisé en ce que** le liquide peut être pulvérisé sur le produit en vrac au moyen du système d'alimentation de liquide (7 ; 57 ; 58) à une pression de l'ordre de 2 bars à 28 bars, de préférence de 12 bars à 23 bars et particulièrement préférablement de 15 bars à 20 bars.

4. Dispositif (1) selon l'une quelconque des revendications 1 à 3, **caractérisé en ce que** le système d'alimentation de liquide (7 ; 57 ; 58) comprend au moins deux buses (8) pour solliciter directement le produit en vrac avec le liquide dans la région de traitement (9), les au moins deux buses (8) étant disposées de telle sorte que le liquide soit transporté dans la direction de transport du produit en vrac (F) et soit orienté vers le rideau.

5. Dispositif (1) selon l'une quelconque des revendications 1 à 4, **caractérisé en ce qu'**un système d'évacuation d'air est disposé en aval du système d'alimentation de liquide (7 ; 57 ; 58), en particulier entre au moins deux buses (8) du système d'alimentation de liquide (7 ; 57 ; 58) et un système de transport disposé en aval et/ou un système de réception pour le mélange d'aliments, en particulier le produit pâteux (14).

6. Dispositif (1) selon l'une quelconque des revendications 2 à 5, **caractérisé en ce que** le système d'alimentation de liquide (7 ; 57 ; 58) comprend au moins deux buses (8) pour solliciter directement le produit en vrac avec le liquide dans la région de traitement (9), les au moins deux buses (8) étant orientées vers l'axe de la région de traitement (6) disposé essentiellement parallèlement à la direction de transport du produit en vrac (F).

7. Dispositif (1) selon l'une quelconque des revendications 1 à 6, **caractérisé en ce que** le système d'alimentation de liquide (7 ; 57 ; 58) comprend un système de conditionnement pour la mise en température du liquide et/ou pour le dosage d'au moins un additif dans le liquide.

8. Dispositif (1) selon l'une quelconque des revendications 1 à 7, **caractérisé en ce qu'**un diamètre d'une vis sans fin (21) du transporteur à vis sans fin (16) est plus petit du côté tourné vers la région de traitement (9) qu'un diamètre du côté opposé à la région de traitement (9), la région de diamètre réduit s'étendant en particulier sur au moins deux pas de vis.

9. Dispositif (1) selon l'une quelconque des revendications 1 à 8, **caractérisé en ce qu'**entre le système d'alimentation de produit en vrac, en particulier la vis sans fin (21) du transporteur à vis sans fin (16), et la région de traitement (9), est disposé un système de distribution (23 ; 37 ; 48) s'élargissant notamment sous forme conique dans la direction de la région de traitement (9).

10. Dispositif (1) selon l'une quelconque des revendications 1 à 9, comprenant en outre un système de distribution (24) pour la distribution du mélange d'aliments tel que par exemple un produit pâteux (14) de boulangerie, préparé notamment avec un procédé selon la revendication 13, le système de distribution (24) comprenant au moins un, et en particulier au moins deux, récipients de maturation (25 ; 41 ; 56) et un système de circulation (26 ; 43) étant disposé dans l'au moins un récipient de maturation (25 ; 41 ; 56) pour faire circuler le mélange d'aliments, en particulier le produit pâteux (14), le système de distribution (24) comprenant un système de pompe (27 ; 40 ; 54) et un système de conduite (28 ; 55) pour distribuer le mélange d'aliments, en particulier le produit pâteux (14), dans l'au moins un récipient de maturation (25 ; 41 ; 56), le système de conduite (28 ; 55) étant en liaison d'écoulement avec un fond (29) de l'au moins un récipient de maturation (25 ; 41 ; 56) en vue de transporter le mélange d'aliments, en particulier le produit pâteux (14), dans l'au moins un récipient de maturation (25 ; 41 ; 56).

11. Dispositif (1) selon la revendication 10, **caractérisé en ce que** le système de distribution (24) comprend au moins deux récipients de maturation (25 ; 41 ; 56), le système de distribution (24) comprenant au moins une armature, en particulier au moins un coulisseau (30) ou au moins une vanne ou des combinaisons quelconques de ceux-ci, au moyen desquels on peut commander et/ou régler dans lequel des récipients de maturation (25 ; 41 ; 56) le mélange d'aliments, en particulier le produit pâteux (14), est transporté.

12. Dispositif (1) selon l'une quelconque des revendications 10 et 11, **caractérisé en ce que** le récipient de maturation (25 ; 41 ; 56) présente au moins une ouverture (32 ; 42 ; 50) à travers laquelle le mélange d'aliments peut être introduit dans le récipient de maturation (25 ; 41 ; 56) et/ou peut-être ressorti de celui-ci, et **en ce que** le récipient de maturation (25 ; 41 ; 56) contient en outre au moins une vanne (59) au moyen de laquelle l'entrée et/ou la sortie peuvent être commandées.

13. Procédé pour mouiller en continu et/ou mélanger en continu un produit en vrac avec un liquide dans un dispositif (1), en particulier selon l'une quelconque des revendications 1 à 12, le dispositif (1) comprenant une région de traitement (9), un système d'alimentation de produit en vrac pour l'alimentation de produit en vrac dans la région de traitement (9) et un système d'alimentation de liquide (7 ; 57 ; 58) pour solliciter directement le produit en vrac avec le liquide dans la région de traitement (9), comprenant les étapes d'alimentation du produit en vrac dans la région de traitement (9) sous forme de rideau (10) et de sollicitation subséquente du rideau (10) complètement au moins sur la surface extérieure (33) avec le liquide afin de produire un mélange d'aliments tel que par exemple un produit pâteux (14), **caractérisé en ce que** le produit en vrac est acheminé uniformément dans la région de traitement (9) au moyen d'un transporteur à vis sans fin (16) ou d'un tuyau (31) avec une hélice (18) disposée dans celui-ci, le transporteur à vis sans fin (16) ou le tuyau (31) étant disposé suivant un angle de 10° maximum par rapport à une verticale.

14. Procédé selon la revendication 13, **caractérisé en ce que** le produit en vrac est acheminé uniformément dans la région de traitement (9) au moyen d'un transporteur à vis sans fin (16) et une vis sans fin (21) du transporteur à vis sans fin (16) tourne avec une vitesse de rotation de l'ordre de 500 tr/m à 1500 tr/m.
